# EUROPEAN PATENT APPLICATION

(11) **EP 4 779 718 A1**
(43) Date of publication of application: **22.07.2026**
(21) Application number: 24880093.0
(22) Date of filing: 15.10.2024
(51) Int. Cl.: H01M 4/58, H01M 4/36, H01M 4/62, C01B 25/45, H01M 4/02

(54) **METHOD FOR PREPARING LITHIUM IRON PHOSPHATE-BASED POSITIVE ELECTRODE ACTIVE MATERIAL**

(30) Priority: 19.10.2023 KR 20230140629
(71) Applicant: LG Chem, Ltd., Seoul 07336 (KR)
(72) Inventor: KWON, Oh Min, Daejeon 34122 (KR); LEE, Won Kyun, Daejeon 34122 (KR); TAK, Jang Yeul, Daejeon 34122 (KR); NAM, Ki Cheon, Daejeon 34122 (KR); LEE, Seung Jun, Daejeon 34122 (KR); JUN, In Kook, Daejeon 34122 (KR)
(74) Representative: Hoffmann Eitle
(86) International application number: PCT/KR2024/015622
(87) International publication number: WO 2025/084756

(57) **Abstract**

The present invention relates to a method for preparing a lithium iron phosphate-based positive electrode active material. The method for preparing a lithium iron phosphate-based positive electrode active material comprises the steps of: (A) dry-pulverizing iron phosphate (FePO₄) and a carbon-containing coating raw material; (B) dry-mixing a lithium-containing raw material, the pulverized iron phosphate, and the pulverized carbon-containing coating raw material to prepare a reaction mixture; (C) compressing the reaction mixture into a pellet form; and (D) sintering the pellet-form reaction mixture to prepare a sintered product.

## Description

### Technical Field

### CROSS-REFERENCE TO RELATED APPLICATION

This application claims the benefit of priority to Korean Patent Application No. 10-2023-0140629, filed on October 19, 2023, the disclosure of which is incorporated herein by reference in its entirety.

### Technical Field

The present invention relates to a method of manufacturing a lithium iron phosphate-based positive electrode active material.

### Background Art

As technology development and demand for mobile devices increase, demand for secondary batteries as an energy source is rapidly increasing. Among the secondary batteries, a lithium secondary battery, which has high energy density and voltage, long cycle life and low self-discharge rate, has been commercialized and is widely used.

A lithium secondary battery is composed of four major components: a positive electrode, a negative electrode, a separator, and an electrolyte. Among them, a positive electrode active material included in the positive electrode plays a major role in determining the capacity, output, and lifespan of the battery. Currently used positive electrode active materials include an NCM-based positive electrode active material containing nickel, cobalt, manganese, and/or aluminum, an LFP (lithium iron phosphate)-based positive electrode active material, etc. Meanwhile, in order for the lithium secondary battery to have high energy density, output, and lifespan, it is essential to improve the performance of the positive electrode active material, and thus, a lot of research has been conducted recently to develop high-performance positive electrode active materials.

The LFP-based positive electrode active material, which is an olivine-structured positive electrode active material, has a lower capacity than that of the NCM-based positive electrode active material, but has the advantages of superior thermal stability as well as price competitiveness. However, the LFP-based positive electrode active material have problems due to high electrical resistance and low lithium ion diffusion, and to solve these problems, research has been conducted on applying carbon coating and adjusting the particle size to a size of several hundred nm, or the like. However, in order to apply carbon coating and adjust the particle size to a size of several hundred nm, a wet grinding process such as a bead mill and a spray drying processes are inevitably performed, which not only requires high energy for the synthesis of positive electrode active materials, but also increases costs due to decreased yield. Therefore, a low-energy and low-cost dry synthesis method that does not proceed with the wet grinding process and the spray drying process is required, but the dry synthesis method has been pointed out as having a disadvantage of high resistance due to uneven carbon coating.

### Disclosure

### Technical Problem

An object to be achieved by the present invention is to provide a method of manufacturing a lithium iron phosphate-based positive electrode active material, which is capable of implementing an LFP-based positive electrode active material having a uniform carbon coating and low resistance even by a dry synthesis method.

### Technical Solution

The present invention provides a method of manufacturing a lithium iron phosphate-based positive electrode active material.
(1) The present invention provides a method of manufacturing a lithium iron phosphate-based positive electrode active material, the method including the steps of: (A) dry-grinding iron phosphate (FePO₄) and a carbon-containing coating raw material, respectively; (B) dry-mixing a lithium-containing raw material, the ground iron phosphate, and the ground carbon-containing coating raw material to prepare a reaction mixture; (C) compressing the reaction mixture to be processed into a pellet shape; and (D) calcining the pellet-shaped reaction mixture to prepare a calcined product.
(2) The present invention provides the method of manufacturing a lithium iron phosphate-based positive electrode active material according to (1) above, wherein the carbon-containing coating raw material is at least one selected from sucrose, glucose, polyethylene glycol, polyvinyl alcohol, and polyvinyl acetate.
(3) The present invention provides the method of manufacturing a lithium iron phosphate-based positive electrode active material according to (1) or (2) above, wherein when preparing the reaction mixture, an M-containing raw material (M is at least one selected from V, Ti, Mn, Zn, Mo, Mg, and N) is further mixed.
(4) The present invention provides the method of manufacturing a lithium iron phosphate-based positive electrode active material according to any one of (1) to (3) above, wherein in the step (A), the grinding of iron phosphate is performed by airflow grinding.
(5) The present invention provides the method of manufacturing a lithium iron phosphate-based positive electrode active material according to any one of (1) to (4) above, wherein in the step (A), the grinding of the carbon-containing coating raw material is performed by mechanical grinding.
(6) The present invention provides the method of manufacturing a lithium iron phosphate-based positive electrode active material according to any one of (1) to (5) above, wherein the ground iron phosphate has an average particle diameter (D₅₀) of 1.0 µm to 2.0 µm.
(7) The present invention provides the method of manufacturing a lithium iron phosphate-based positive electrode active material according to any one of (1) to (6) above, wherein the ground carbon-containing coating raw material has a bulk density of 500 kg/m³ to 700 kg/m³.
(8) The present invention provides the method for manufacturing a lithium iron phosphate-based positive electrode active material according to any one of (1) to (7) above, wherein the compression in the step (C) is performed at a pressure of 0.10 ton/cm² to 1.0 ton/cm².
(9) The present invention provides the method of manufacturing a lithium iron phosphate-based positive electrode active material according to any one of (1) to (8) above, wherein the calcination is performed at a temperature of 600°C to 800°C.
(10) The present invention provides the method of manufacturing a lithium iron phosphate-based positive electrode active material according to any one of (1) to (9) above, wherein the method further includes a step of (E) grinding the calcined product.

### Advantageous Effects

In the method of manufacturing a lithium iron phosphate-based positive electrode active material according to the present invention, iron phosphate (FePO₄) and a carbon-containing coating raw material are first dry-ground, respectively, and then mixed with a lithium-containing raw material to prepare a reaction mixture, which is compressed and processed into a pellet shape and then calcined, whereby not only can the fixation of the raw materials be prevented, but also the reactivity of the raw materials can be improved. Accordingly, the resulting lithium iron phosphate-based positive electrode active material includes a uniform carbon coating layer and has the characteristic of low powder resistance.

### Description of Drawings

FIG. 1 is a SEM image of the lithium iron phosphate positive electrode active material of Example 1.
FIG. 2 is a SEM image of the lithium iron phosphate positive electrode active material of Comparative Example 1.
FIG. 3 is a STEM-EDS mapping image of the lithium iron phosphate positive electrode active material of Example 1.

### Best Modes of the Invention

Hereinafter, the present invention will be described in more detail to help understand the present invention. The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

The terms used in the specification are used only to describe exemplary embodiments, and are not intended to limit the present invention. Singular expressions include plural expressions unless the context clearly implies otherwise.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

In this specification, 'Dₙ' means a particle diameter at the n% point of a volume cumulative distribution according to the particle diameter. That is, D₅₀ is a particle diameter at the 50% point of a volume cumulative distribution according to the particle diameter, D₉₀ is a particle diameter at the 90% point of a volume cumulative distribution according to the particle diameter, and D₁₀ is a particle diameter at the 10% point of a volume cumulative distribution according to the particle diameter. The Dₙ can be measured using a laser diffraction method. Specifically, the powder to be measured is dispersed in a dispersion medium (xylene) and then introduced into a commercially available laser diffraction particle size measuring device (e.g., Malvern Panlytical, Mastersizer 3000) to measure a difference in diffraction patterns according to the particle size when the particles pass through the laser beam, thereby calculating a particle size distribution. By calculating particle diameters at points that are 10%, 50%, and 90% of the volume cumulative distribution according to the particle diameter in the measuring device, D₁₀, D₅₀, and D₉₀ can be measured.

In this specification, the bulk density is measured according to the ISO 60 method.

### Method of Manufacturing Lithium Iron Phosphate-Based Positive Electrode Active Material

A method of manufacturing a lithium iron phosphate-based positive electrode active material according to the present invention includes the steps of: (A) dry-grinding iron phosphate (FePO₄) and a carbon-containing coating raw material, respectively; (B) dry-mixing a lithium-containing raw material, the ground iron phosphate, and the ground carbon-containing coating raw material to prepare a reaction mixture; (C) compressing the reaction mixture to be processed into a pellet shape; and (D) calcining the pellet-shaped reaction mixture to prepare a calcined product.

The method of manufacturing a lithium iron phosphate-based positive electrode active material further includes a step of (E) grinding the calcined product.

In the method of manufacturing a lithium iron phosphate-based positive electrode active material according to the present invention, iron phosphate (FePO₄) and a carbon-containing coating raw material are first dry-ground, respectively, and then mixed with a lithium-containing raw material to prepare a reaction mixture, which is compressed and processed into a pellet shape and then calcined, whereby not only can the fixation of the raw materials be prevented, but also the reactivity of the raw materials can be improved. Accordingly, the resulting lithium iron phosphate-based positive electrode active material includes a uniform carbon coating layer and has the characteristic of low powder resistance.

Hereinafter, the method of manufacturing a lithium iron phosphate-based positive electrode active material according to the present invention will be described step by step.

### Step (A)

The step (A) is a step of dry-grinding iron phosphate (FePO₄) and a carbon-containing coating raw material, respectively. That is, it is a step of dry-grinding iron phosphate (FePO₄) and a carbon-containing coating raw material, respectively, to prepare ground iron phosphate and a ground carbon-containing coating raw material. The step (A) is a process of first grinding each of the raw materials before mixing them, and in this case, the surface area of the raw materials increases, thereby improving the reactivity. On the other hand, if the raw materials are mixed without first grinding them and then the positive electrode active material is manufactured, there is a problem that the raw materials may be fixed while being mixed unevenly, and partial compositional unevenness may occur, thereby increasing the resistance.

The dry grinding is a method of grinding without using water or liquid, and can significantly improve process costs and yields compared to wet grinding.

According to the present invention, the carbon-containing coating raw material may be at least one selected from sucrose, glucose, polyethylene glycol, polyvinyl alcohol, and polyvinyl acetate.

Specifically, the step (A) is a step of independently grinding iron phosphate (FePO₄) and a carbon-containing coating raw material, respectively.

According to the present invention, the grinding of iron phosphate in the step (A) may be performed by airflow grinding. The airflow grinding is a method in which powder is ground by impact while forming an airflow by air, and may be an air jet mill. The grinding of iron phosphate may be performed for 0.1 to 2 hours under an ejection air of 1 to 10 bar and a grinding air of 0.5 to 2.0 bar. Specifically, the iron phosphate may be injected at a rate of 5 g/min using a single screw feeder, and may be ground under the above conditions.

According to the present invention, in the step (A), the grinding of the carbon-containing coating raw material may be performed by mechanical grinding. The mechanical grinding is a method in which powder is ground by colliding with a rotating device, and may be a rotary mill, a hammer mill, etc. The grinding of the carbon-containing coating raw material may be performed at 500 to 2000 rpm for 0.5 to 2 hours.

According to the present invention, the ground iron phosphate has an average particle diameter (D₅₀) of 1.0 µm to 2.0 µm. Specifically, the average particle diameter (D₅₀) of the ground iron phosphate may be 1.0 µm or more, 1.10 µm or more, 1.20 µm or more, 1.30 µm or more, 1.40 µm or more, 1.50 µm or more, 1.60 µm or more, 1.70 µm or more, 1.80 µm or more, or 1.85 µm or more, and may be 1.90 µm or less, 1.95 µm or less, or 2.0 µm or less. When the average particle diameter (D₅₀) of the ground iron phosphate is within the above range, the reactivity with lithium is high due to the small particle size, and as a result, the electrochemical characteristics of the positive electrode active material manufactured can be excellent.

According to the present invention, the ground carbon-containing coating raw material may have a bulk density of 500 kg/m³ to 700 kg/m³. Specifically, the bulk density of the ground carbon-containing coating raw material may be 500 kg/m³ or more, 510 kg/m³ or more, 520 kg/m³ or more, 530 kg/m³ or more, 540 kg/m³ or more, or 550 kg/m³, may be 600 kg/m³ or less, 610 kg/m³ or less, 620 kg/m³ or less, 630 kg/m³ or less, 640 kg/m³ or less, 650 kg/m³ or less, 660 kg/m³ or less, 670 kg/m³ or less, 680 kg/m³ or less, 690 kg/m³ or less, or 700 kg/m³ or less. When the bulk density of the ground carbon-containing coating raw material is within the above range, the surface area is increased to widen a contact surface with iron phosphate and lithium, thereby enabling uniform coating, and thus there is an advantage of increased conductivity of the manufactured positive electrode active material. The bulk density is measured according to the ISO 60 method, and is evaluated by, for example, dropping the powder of the ground carbon-containing coating raw material into a 3.16 cc measuring container and measuring the weight.

### Step (B)

The step (B) is a step of dry mixing a lithium-containing raw material, a ground iron phosphate, and a ground carbon-containing coating raw material to prepare a reaction mixture.

According to the present invention, when preparing the reaction mixture, an M-containing raw material (M is at least one selected from V, Ti, Mn, Zn, Mo, Mg, and N) may be further mixed.

According to the present invention, the lithium-containing raw material may be Li₂S, Li₂S₂, Li₂S₄, Li₂S₆, LiCl, LiBr, Li, Li₃PS₄, LiOH, Li₂CO₃, or a combination thereof, but is not limited thereto.

The lithium-containing raw material may be mixed in an amount such that the composition of the resulting lithium iron phosphate-based compound has a composition represented by Chemical Formula 1 described herein. For example, the lithium-containing raw material may be injected so that the molar ratio (Li:Fe) of lithium (Li) contained in the lithium-containing raw material to iron (Fe) contained in the ground iron phosphate is 1.0 to 1.1:1, specifically 1.0 to 1.05:1. When the M-containing raw material is further mixed, the lithium-containing raw material may be injected so that the molar ratio (Li:Fe+M) of the lithium (Li) contained in the lithium-containing raw material to the sum of the molar numbers of iron contained in the ground iron phosphate and M contained in the M-containing raw material is 1.0 to 1.1:1, specifically 1.0 to 1.05:1.

According to the present invention, the carbon-containing coating raw material may be at least one selected from sucrose, glucose, polyethylene glycol, polyvinyl alcohol, and polyvinyl acetate.

The carbon-containing raw material may be mixed in an amount of 8 wt% to 13 wt% based on the total weight of the lithium-containing raw material and the ground iron phosphate. In this case, a coating layer containing carbon is appropriately formed on the surface of the positive electrode active material thus manufactured, so that the conductivity can be improved while maintaining the energy density of the positive electrode active material.

According to the present invention, the M-containing raw material (at least one selected from V, Ti, Mn, Zn, Mo, Mg, and N) may be V₂O₅, TiO₂, MnO, ZnO, MoO, MgO, NH₄OH, or a combination thereof, but is not limited thereto. The M-containing raw material may be mixed in an amount such that the composition of the resulting lithium iron phosphate-based compound has a composition represented by Chemical Formula 1 described herein.

When the reaction mixture includes the M-containing raw material (at least one selected from V, Ti, Mn, Zn, Mo, Mg, and N), M is doped into the resulting positive electrode active material, so that the charge/discharge capacity and rate characteristics can be further improved.

The mixing in the step (A) may be performed by mechanical mixing. The mechanical mixing is a method in which powders are mixed by a rotating device, and may be a rotary mill, a hammer mill, etc. The mixing may be performed at 500 to 2000 rpm for 0.5 to 2 hours. In this case, the raw materials can be mixed more evenly.

### Step (C)

The step (C) is a step of compressing the reaction mixture to process it into a pellet shape. For example, the reaction mixture may be compressed by a press to be pelletized. In this case, the raw materials included in the reaction mixture are densified, so that the contact area between the particles increases, and thus there is an advantage in that the reactivity between the raw materials is improved.

According to the present invention, the compression in the step (C) may be performed at a pressure of 0.10 ton/cm² to 1.0 ton/cm². Specifically, the compression may be performed under a pressure of 0.10 ton/cm² or more, 0.15 ton/cm² or more, 0.20 ton/cm² or more, 0.25 ton/cm² or more, 0.30 ton/cm² or more, 0.35 ton/cm² or more, 0.40 ton/cm² or more, 0.45 ton/cm² or more, or 0.50 ton/cm² or more, and 0.80 ton/cm² or less, 0.85 ton/cm² or less, 0.95 ton/cm² or less, or 1.0 ton/cm² or less. In this case, even after the pellet is taken out of the mold, the pellet shape is well maintained, so that a more uniform result can be obtained.

### Step (D)

The (D) step is a step of calcining the reaction mixture in the form of a pellet.

According to the present invention, the calcination may be performed under an inert atmosphere in order to prevent a side reaction with oxygen and moisture from occurring. For example, the calcination may be performed under an argon atmosphere, a nitrogen atmosphere, or a helium atmosphere.

According to the present invention, the calcination may be performed at a temperature of 600°C to 800°C. More specifically, the calcination temperature may be 600°C or higher, 610°C or higher, 620°C or higher, 630°C or higher, 640°C or higher, or 650°C or higher, and may be 750°C or lower, 760°C or lower, 770°C or lower, 780°C or lower, 790°C or lower, or 800°C or lower. When the calcination temperature is within the above range, an appropriate primary particle size can be obtained, thereby improving electrochemical characteristics.

The temperature maintenance time of the calcination step may be 5 hours to 20 hours. In this case, the powder resistance and rate characteristics are improved due to the uniform carbon coating.

### Step (E)

The method of manufacturing a lithium iron phosphate-based positive electrode active material further includes a step of (D) grinding the calcined product.

The step of grinding the calcined product may be performed so that the average particle diameter (D₅₀) of the resulting lithium iron phosphate-based positive electrode active material is 0.5 µm to 3.0 µm in order to increase the reactivity with lithium.

According to the present invention, the grinding in the step (E) may be performed by airflow grinding. The airflow grinding is a method in which powder is ground by impact while forming an airflow by air, and may be an air jet mill. The grinding of the calcined product may be performed for 0.1 to 2 hours under an ejection air of 1 to 10 bar and a grinding air of 0.5 to 2.0 bar. Specifically, the calcined product may be injected at a rate of 5 g/min using a single screw feeder, and may be ground under the above conditions.

According to the present invention, the resulting lithium iron phosphate-based positive electrode active material comprises a lithium iron phosphate-based compound; and a coating layer including carbon formed on the lithium iron phosphate-based compound; and may be a lithium iron phosphate-based positive electrode active material having a powder resistance of 500 Ω×cm or less.

The powder resistance is a volume resistance measured using a Hioki Rm3545 resistance measuring device in a state in which 5 g of powder is put in a circular 4-point probe (Gold Pin) mold having a diameter of 22 mm and a pressure of 2000 kgf/cm² is applied.

According to the present invention, the lithium iron phosphate-based compound may have a composition represented by Chemical Formula 1 below:

[Chemical Formula 1] LiFe₁₋ₓMₓPO₄

wherein M is at least one selected from V, Ti, Mn, Zn, Mo, Mg, and N, and 0≤x<1.

The lithium iron phosphate-based compound may be doped with the M. In this case, the iron phosphate-based lattice structure and distance are changed to increase the diffusivity of lithium ions, and as a result, the electrochemical properties of a battery including the positive electrode active material can be improved.

According to the present invention, the lithium iron phosphate-based positive electrode active material may have an average particle diameter (D₅₀) of 0.5 µm to 3.0 µm. Specifically, the average particle diameter (D₅₀) of the lithium iron phosphate-based positive electrode active material may be 0.5 µm or more, 0.6 µm or more, 0.7 µm or more, 0.8 µm or more, 0.9 µm or more, 1.0 µm or more, 1.1 µm or more, 1.2 µm or more, 1.3 µm or more, 1.4 µm or more, or 1.5 µm or more, and may be 2.0 µm or less, 2.1 µm or less, 2.2 µm or less, 2.3 µm or less, 2.4 µm or less, 2.5 µm or less, 2.6 µm or less, 2.7 µm or less, 2.8 µm or less, 2.9 µm or less, or 3.0 µm or less. When the average particle diameter (D₅₀) of the lithium iron phosphate-based positive electrode active material is within the above range, the reactivity with lithium is high due to the small particle size, thereby providing an advantage of excellent electrochemical characteristics.

According to the present invention, the coating layer may be uniformly coated on the surface of the lithium iron phosphate-based compound. The coating layer can improve electronic conductivity and ionic conductivity when electrons move during charging and discharging of a battery including the positive electrode active material. On the other hand, if the coating layer does not exist, the positive electrode active material has high resistance, causing problems in the diffusion of lithium ions and the movement of electrons.

The content of carbon included in the coating layer may be 1 wt% to 3 wt% based on the total weight of the lithium iron phosphate-based positive electrode active material in order to further improve electronic conductivity and ionic conductivity. The coating layer may be composed only of carbon, and in this case, the coating layer may be 1 wt% to 3 wt% based on the total weight of the lithium iron phosphate-based positive electrode active material.

The lithium iron phosphate-based positive electrode active material according to the present invention has a powder resistance of 500 Ω×cm or less. Specifically, the powder resistance of the lithium iron phosphate-based positive electrode active material may be 50 Ω×cm or more, 100 Ω×cm or more, 150 Ω×cm or more, 200 Ω×cm or more, 250 Ω×cm or more, 300 Ω×cm or more, or 350 Ω×cm or more, and may be 390 Ω×cm or less, 400 Ω×cm or less, 410 Ω×cm or less, 420 Ω×cm or less, 430 Ω×cm or less, 440 Ω×cm or less, 450 Ω×cm or less, 460 Ω×cm or less, 470 Ω×cm or less, 480 Ω×cm or less, 490 Ω×cm or less, or 500 Ω×cm or less. In this case, the positive electrode active material has low resistance and excellent conductivity, so that the electrochemical characteristics are improved. Meanwhile, when the powder resistance of the positive electrode active material exceeds 500 Ω×cm, the positive electrode active material has high resistance, causing problems in the diffusion of lithium ions and the movement of electrons.

The lithium iron phosphate-based compound according to the present invention may exist in the form of a primary particle, not in the form of a secondary particle formed by agglomeration of primary particles. That is, the primary particles may exist separately without agglomeration. Therefore, the lithium iron phosphate-based positive electrode active material according to the present invention may have the coating layer formed on the lithium iron phosphate-based compound in the form of a primary particle. In this case, the coating layer may be in the form of a thin film.

### Positive Electrode

The present invention provides a positive electrode including the lithium iron phosphate-based positive electrode active material.

The positive electrode may include a positive electrode current collector and a positive electrode active material layer formed on the positive electrode current collector, wherein the positive electrode active material layer may include the positive electrode active material.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 µm to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material, may optionally include a conductive material and a binder, if necessary. In this case, the positive electrode active material may be included in an amount of 80% to 99% by weight, more specifically 85% to 98.5% by weight, based on the total weight of the positive electrode active material layer, and can exhibit excellent capacity characteristics within this range.

The conductive material is used to impart conductivity to the electrode, and may be any material without particular limitation as long as it has electronic conductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be included in an amount of 0.1% by weight to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1% by weight to 15% by weight based on the total weight of the positive electrode active material layer.

The positive electrode may be manufactured according to a conventional positive electrode manufacturing method except for the use of the positive electrode active material described above. Specifically, the above positive electrode active material and, if necessary, a binder, a conductive material, and a dispersant may be dissolved or dispersed in a solvent to prepare a composition for forming a positive electrode active material layer (positive electrode slurry), which may be applied on a positive electrode current collector, and then dried and rolled to manufacture the positive electrode. Alternatively, the positive electrode may be manufactured by casting a composition for forming a positive electrode active material layer on a separate support, peeling off the support to obtain a film, and laminating the film on a positive electrode current collector.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder, and dispersant in consideration of the application thickness of the slurry and the manufacturing yield, and to allow the slurry to have a viscosity capable of exhibiting excellent thickness uniformity when applied for the subsequent positive electrode production.

### Lithium Secondary Battery

The present invention provides a lithium secondary battery including the positive electrode described above.

The lithium secondary battery may include: the positive electrode; a negative electrode; and a separator and an electrolyte interposed between the positive electrode and the negative electrode. In addition, the lithium secondary battery may optionally further include a battery container for accommodating an electrode assembly formed of the positive electrode, negative electrode, and separator, and a sealing member for sealing the battery container.

The negative electrode may include a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 µm to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer may optionally include a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiO_{β} (0<β<2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes. The negative electrode active material may be included in an amount of 80% to 99% by weight based on the total weight of the negative electrode active material layer.

The binder of the negative electrode active material layer is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material of the negative electrode active material layer is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer (negative electrode slurry), which may be applied on a negative electrode current collector and dried to produce the negative electrode. Alternatively, the negative electrode may be manufactured by casting the composition for forming a negative electrode active material layer on a separate support, peeling a film from the support, and then laminating the film on a negative electrode current collector.

The separator is to separate the negative electrode and the positive electrode, and to provide a passage for lithium ions to move. Any separator may be used without particular limitation as long as it is generally used as a separator in the lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multilayer structure.

The electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto. As specific example, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethylcarbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 M to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Since the lithium secondary battery including the positive electrode active material according to the present invention exhibits excellent capacity characteristics and resistance characteristics, it is useful in the field of portable devices such as mobile phones, laptop computers, digital cameras, and electric vehicles such as hybrid electric vehicle (HEV) and electric vehicle (EV).

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

Accordingly, a battery module including the lithium secondary battery as a unit cell and a battery pack including the same are provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

### Modes for Carrying Out the Invention

Hereinafter, examples of the present invention will be described in detail so that those skilled in the art can easily perform the present invention. However, the present invention may be embodied in a variety of forms and is not limited to the examples described herein.

### Examples and Comparative Examples

### Example 1

FePO₄ (Yacheng, China, G01X) was injected at a rate of 5 g/min using a single screw feeder and ground with an air jet mill equipment (Isaac E&C, 4" size jet mill) under an ejection air of 5 bar and a grinding air of 1.0 bar for 1 hour to prepare ground FePO₄ (average particle diameter (D₅₀): 1.86 µm).

Sucrose (Duksan Pharmaceutical, purity 99.6%) was ground with a mixer (Shinil Electronics, SFN-C656CS) at 2000 rpm for 1 hour to prepare ground sucrose (bulk density: 590 kg/m³).

Li₂CO₃ (Tianqi) and the ground FePO₄ were injected to a mixer (Shinil Electronics, SFN-C656CS) so that the molar ratio of Li:Fe was 1.05:1, and the ground sucrose was additionally injected so that it would be 12 wt% of the total weight of the Li₂CO₃ and the ground FePO₄ injected to the mixer, and the injected raw materials were mixed at 2000 rpm for about 1 minute to prepare a reaction mixture.

3 g of the reaction mixture was injected to a 31 mm-diameter pellet die (Carver, Carver-3902), and processed into a pellet shape by applying a vacuum while pressing with a force of 4 tons (pressure: 0.53 tons/cm²).

Thereafter, the pellet-shaped reaction mixture was calcined at 700°C for 10 hours under a nitrogen atmosphere to produce a calcined product, and the calcined product was injected at a rate of 5 g/min using a single screw feeder and ground with an air jet mill equipment (Isaac E&C, 4" size jet mill) under an ejection air of 5 bar and a grinding air of 1.0 bar for 1 hour to manufacture a lithium iron phosphate positive electrode active material including a coating layer including carbon.

### Example 2

A lithium iron phosphate positive electrode active material was manufactured in the same manner as in Example 1, except that the pellet-shaped reaction mixture of Example 1 was calcined at 700°C for 8 hours under a nitrogen atmosphere.

### Example 3

A lithium iron phosphate positive electrode active material was manufactured in the same manner as in Example 1, except that 3 g of the reaction mixture was injected to a 31 mm-diameter pellet die (Carver, Carver-3902), and processed into a pellet shape by applying a vacuum while pressing with a force of 6 tons (pressure: 0.79 tons/cm²).

### Comparative Example 1

Sucrose (Duksan Pharmaceutical, purity 99.6%) was ground with a mixer (Shinil Electronics, SFN-C656CS) at 2000 rpm for 1 hour to prepare ground sucrose (bulk density: 590 kg/m³).

Li₂CO₃ (Tianqi) and FePO₄ (Yacheng, China, G01X) (average particle diameter (D₅₀): 2.34 µm) were injected to a mixer (Shinil Electronics, SFN-C656CS) so that the molar ratio of Li:Fe was 1.05:1, and the ground sucrose was additionally injected so that it would be 12 wt% of the total weight of the Li₂CO₃ and the FePO₄ injected to the mixer, and the injected raw materials were mixed at 2000 rpm for about 1 minute to prepare a reaction mixture.

3 g of the reaction mixture was injected to a 31 mm-diameter pellet die (Carver, Carver-3902), and processed into a pellet shape by applying a vacuum while pressing with a force of 4 tons.

Thereafter, the pellet-shaped reaction mixture was calcined at 700°C for 10 hours under a nitrogen atmosphere to prepare a lithium iron phosphate positive electrode active material including a coating layer including carbon.

### Comparative Example 2

Li₂CO₃ (Tianqi) and FePO₄ (Yacheng, China, G01X) (average particle diameter (D₅₀): 2.34 µm) were injected to a mixer (Shinil Electronics, SFN-C656CS) so that the molar ratio of Li:Fe was 1.05:1, and sucrose (Duksan Pharmaceutical, purity 99.6%) (bulk density: 760 kg/m³) was additionally injected so that it would be 12 wt% of the total weight of the Li₂CO₃ and the FePO₄ injected to the mixer, and the injected raw materials were mixed at 2000 rpm for about 1 minute to prepare a reaction mixture.

3 g of the reaction mixture was injected to a 31 mm-diameter pellet die (Carver, Carver-3902), and processed into a pellet shape by applying a vacuum while pressing with a force of 4 tons.

Thereafter, the pellet-shaped reaction mixture was calcined at 700°C for 10 hours under a nitrogen atmosphere to prepare a lithium iron phosphate positive electrode active material including a coating layer including carbon.

### Comparative Example 3

FePO₄ (Yacheng, China, G01X) was injected at a rate of 5 g/min using a single screw feeder and ground with an air jet mill equipment (Isaac E&C, 4" size jet mill) under an ejection air of 5 bar and a grinding air of 1.0 bar for 1 hour to prepare ground FePO₄ (average particle diameter (D₅₀): 1.86 µm).

Sucrose (Duksan Pharmaceutical, purity 99.6%) was ground with a mixer (Shinil Electronics, SFN-C656CS) at 2000 rpm for 1 hour to prepare ground sucrose (bulk density: 590 kg/m³).

Li₂CO₃ (Tianqi) and the ground FePO₄ were injected to a mixer (Shinil Electronics, SFN-C656CS) so that the molar ratio of Li:Fe was 1.05:1, and the ground sucrose was additionally injected so that it would be 12 wt% of the total weight of the Li₂CO₃ and the ground FePO₄ injected to the mixer, and the injected raw materials were mixed at 2000 rpm for about 1 minute to prepare a reaction mixture.

The reaction mixture was calcined at 700°C for 10 hours under a nitrogen atmosphere to prepare a lithium iron phosphate positive electrode active material including a coating layer including carbon.

### Comparative Example 4

Li₂CO₃ (Tianqi) and FePO₄ (Yacheng, China, G01X) (average particle diameter (D₅₀): 2.34 µm) were injected to a mixer (Shinil Electronics, SFN-C656CS) so that the molar ratio of Li:Fe was 1.05:1, and sucrose (Duksan Pharmaceutical, purity 99.6%) (bulk density: 760 kg/m³) was additionally injected so that it would be 12 wt% of the total weight of the Li₂CO₃ and the FePO₄ injected to the mixer, and the injected raw materials were mixed at 2000 rpm for about 1 minute to prepare a reaction mixture.

The reaction mixture was calcined at 700°C for 10 hours under a nitrogen atmosphere to prepare a lithium iron phosphate positive electrode active material including a coating layer including carbon.

Table 1 below shows whether the raw materials were ground before mixing in the examples and comparative examples, and whether the reaction mixture was processed into a pellet shape.

**[Table 1]**

| Division | Whether FePO₄ is ground | Whether sucrose is ground | Whether processed into a pellet shape |
|---|---|---|---|
| Example 1 | O | O | O |
| Example 2 | O | O | O |
| Example 3 | O | O | O |
| Comparative Example 1 | X | O | O |
| Comparative Example 2 | X | X | O |
| Comparative Example 3 | O | O | X |
| Comparative Example 4 | X | X | X |

### Experimental Example

### Experimental Example 1: Evaluation of powder resistance

5 g of each of the lithium iron phosphate positive electrode active materials manufactured in the above examples and comparative examples was placed in a circular 4-point probe (Gold Pin) mold having a diameter of 22 mm, and a pressure of 2000 kgf/cm² was applied. In that state, the volume resistance was measured using a Hioki Rm3545 resistance measuring device, and was shown in Table 1 below as the powder resistance.

### Experimental Example 2: Evaluation of particle size distribution

20 mg of each of the lithium iron phosphate positive electrode active materials manufactured in the above examples and comparative examples was dispersed in 5 ml of Triton X-100 (Sigma Aldrich), and then introduced into a laser diffraction particle size measuring device (Malvern Panalytical, Mastersizer 3000) to measure the average particle diameter (D₅₀) of the positive electrode active materials, and the results were shown in Table 1 below.

**[Table 2]**

| Division | Powder resistance (Ω×cm) | Average particle diameter (D₅₀) ( µm) |
|---|---|---|
| Example 1 | 370 | 1.6 |
| Example 2 | 378 | 1.6 |
| Example 3 | 385 | 1.6 |
| Comparative Example 1 | 1720 | 2.3 |
| Comparative Example 2 | 3150 | 2.5 |
| Comparative Example 3 | 3815 | 2.8 |
| Comparative Example 4 | 4150 | 2.8 |

Referring to Table 2 above, it can be confirmed that the positive electrode active materials of Examples 1 to 3 have significantly lower powder resistance than that of the positive electrode active materials of Comparative Examples 1 to 4. This is because, when manufacturing the positive electrode active materials of Examples 1 to 3, the iron phosphate (FePO₄) and the carbon-containing coating raw material were first dry-ground, respectively, and then mixed with the lithium-containing raw material to prepare a reaction mixture, which was compressed and processed into a pellet shape and then calcined, whereby the fixation of the raw materials was prevented, and the reactivity of the raw materials was significantly improved.

### Experimental Example 3: Measurement of SEM images

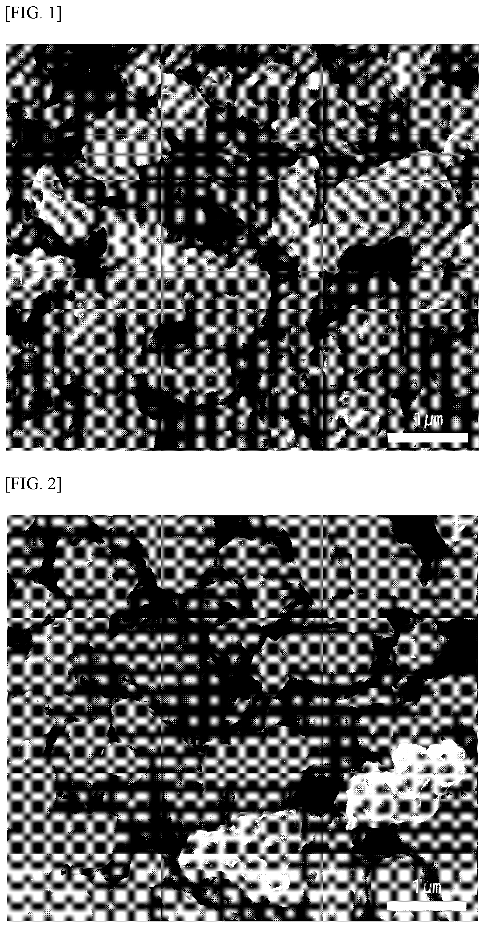

SEM images of each of the lithium iron phosphate positive electrode active material manufactured in Example 1 and Comparative Example 1 were measured using SEM (FEI QUANTA 600), and the results were shown in FIGS. 1 and 2.

FIG. 1 is a SEM image of the lithium iron phosphate positive electrode active material of Example 1, and FIG. 2 is a SEM image of the lithium iron phosphate positive electrode active material of Comparative Example 1.

Referring to FIGS.1 and 2, it can be confirmed that the lithium iron phosphate positive electrode active material of Example 1 has a smaller particle size than that of the lithium iron phosphate positive electrode active material of Comparative Example 1 because ground FePO₄ was used when manufacturing the positive electrode active material.

### Experimental Example 4: STEM-EDS Analysis

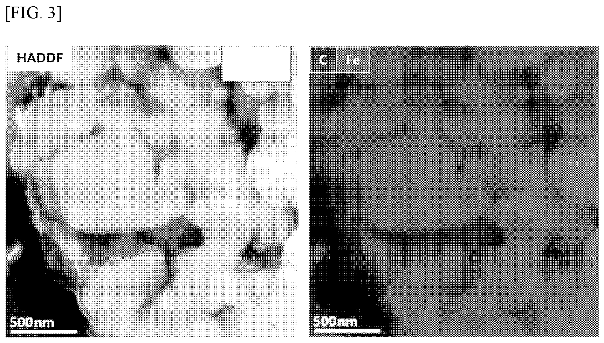

The STEM-EDS mapping image of the lithium iron phosphate positive electrode active material manufactured in the above Example 1 was obtained using STEM-EDS (ThermoFisher, HEILOS 4 UX), and was shown in FIG. 3.

FIG. 3 is a STEM-EDS mapping image of the lithium iron phosphate positive electrode active material of Example 1.

Referring to FIG. 3, it can be confirmed that a carbon coating layer is uniformly formed on the surface of the lithium iron phosphate positive electrode active material of Example 1.

### Experimental Example 5: Evaluation of battery characteristics

Each of the lithium iron phosphate positive electrode active materials manufactured in the above examples and comparative examples, carbon black as a conductive material, and polyvinylidene fluoride (PVDF) as a binder were mixed in a weight ratio of 96:2:2 in an N-methylpyrrolidone (NMP) solvent to prepare a positive electrode slurry. The prepared positive electrode slurry was coated on one surface of an aluminum current collector, dried at 130°C, and rolled to prepare a positive electrode.

An electrode assembly was manufactured by using a lithium metal electrode as a negative electrode and interposing a porous polyethylene separator between the positive electrode and the negative electrode. The electrode assembly was placed inside a battery case, and an electrolyte obtained by dissolving 1.0M LiPF₆ in an organic solvent having ethylene carbonate (EC):ethyl methyl carbonate (EMC):diethyl carbonate (DEC) mixed at a volume ratio of 3:4:3 was injected to manufacture a half cell.

When each of the half cell manufactured as described above was charged to 3.65 V in CC (0.1 C)-CV (Cut-off current: 0.1 C) mode at 25°C and then discharged to 2.5 V at 0.1 C, the initial charge/discharge capacity and DCIR resistance were measured and shown in Table 3 below.

**[Table 3]**

| Division | Charge capacity (mAh/g) | Discharge capacity (mAh/g) | DCIR (Ω) |
|---|---|---|---|
| Example 1 | 152.5 | 143.1 | 119.0 |
| Example 2 | 152.0 | 142.9 | 119.2 |
| Example 3 | 152.4 | 143.0 | 119.3 |
| Comparative Example 1 | 131.2 | 115.8 | 186.2 |
| Comparative Example 2 | 116.2 | 103.6 | 218.5 |
| Comparative Example 3 | 109.3 | 96.2 | 241.1 |
| Comparative Example 4 | 108.5 | 94.3 | 247.6 |

Referring to Table 3 above, it can be confirmed that the batteries including the positive electrode active materials of Examples 1 to 3 not only have significantly superior initial charge/discharge capacities but also have significantly lower resistance compared to the batteries including the positive electrode active materials of Comparative Examples 1 to 4. This is because, as described above, the positive electrode active materials of Examples 1 to 3 are manufactured by the method of manufacturing a positive electrode active material according to the present invention, and thus include a uniform carbon coating layer and have low powder resistance.

## Claims

1. A method of manufacturing a lithium iron phosphate-based positive electrode active material, the method including the steps of:
(A) dry-grinding iron phosphate (FePO₄) and a carbon-containing coating raw material, respectively;
(B) dry-mixing a lithium-containing raw material, the ground iron phosphate, and the ground carbon-containing coating raw material to prepare a reaction mixture;
(C) compressing the reaction mixture to be processed into a pellet shape; and
(D) calcining the pellet-shaped reaction mixture to prepare a calcined product.

2. The method of manufacturing a lithium iron phosphate-based positive electrode active material according to claim 1, wherein the carbon-containing coating raw material is at least one selected from sucrose, glucose, polyethylene glycol, polyvinyl alcohol, and polyvinyl acetate.

3. The method of manufacturing a lithium iron phosphate-based positive electrode active material according to claim 1, wherein when preparing the reaction mixture, an M-containing raw material (M is at least one selected from V, Ti, Mn, Zn, Mo, Mg, and N) is further mixed.

4. The method of manufacturing a lithium iron phosphate-based positive electrode active material according to claim 1, wherein in the step (A), the grinding of iron phosphate is performed by airflow grinding.

5. The method of manufacturing a lithium iron phosphate-based positive electrode active material according to claim 1, wherein in the step (A), the grinding of the carbon-containing coating raw material is performed by mechanical grinding.

6. The method of manufacturing a lithium iron phosphate-based positive electrode active material according to claim 1, wherein the ground iron phosphate has an average particle diameter (D₅₀) of 1.0 µm to 2.0 µm.

7. The method of manufacturing a lithium iron phosphate-based positive electrode active material according to claim 1, wherein the ground carbon-containing coating raw material has a bulk density of 500 kg/m³ to 700 kg/m³.

8. The method of manufacturing a lithium iron phosphate-based positive electrode active material according to claim 1, wherein the compression in the step (C) is performed at a pressure of 0.10 ton/cm² to 1.0 ton/cm².

9. The method of manufacturing a lithium iron phosphate-based positive electrode active material according to claim 1, wherein the calcination is performed at a temperature of 600°C to 800°C.

10. The method of manufacturing a lithium iron phosphate-based positive electrode active material according to claim 1, wherein the method further includes a step of (E) grinding the calcined product.
